# EUROPÄISCHE PATENTSCHRIFT

(11) **EP 1 495 851 B1**
(45) Veröffentlichungstag und Bekanntmachung des Hinweises auf die Patenterteilung: **23.08.2006**
(21) Anmeldenummer: 04009252.0
(22) Anmeldetag: 20.04.2004
(51) Int. Cl.: B29C 45/16

(54) **Werkzeug zum Mehrkomponenten-Spritzgiessen, insbesondere zum 2-Komponenten-Spritzgiessen, von Kunststoff-Spritzteilen**
Mould for multi-material injection moulding, in particular two component injection moulding, of plastic parts
Moule pour le moulage par injection à plusieurs composants, notamment moulage à deux composants, de pieces en matière plastique

(30) Priorität: 08.07.2003 DE 10330650
(43) Veröffentlichungstag der Anmeldung: 12.01.2005
(73) Patentinhaber: Braun Formenbau GmbH, 79353 Bahlingen (DE)
(72) Erfinder: Herb, Eckard, 79346 Endingen (DE); Schreiber, Peter, 77716 Hofstetten i.K. (DE)
(74) Vertreter: Goy, Wolfgang

(56) Entgegenhaltungen:
- DE-U- 20 201 589
- US-B1- 6 379 139
- RIEF B: "MEHR FARBE UND FUNKTION" KUNSTSTOFFE, CARL HANSER VERLAG. MUNCHEN, DE, Bd. 93, Nr. 6, Juni 2003 (2003-06), Seiten 20-22,24,26, XP001153845 ISSN: 0023-5563
- JAEGER A: "NEUES VOM MEHRKOMPONENTEN-SPRITZGIESSEN VERFAHRENSKOMBINATIONEN BIETEN WIRTSCHAFTLICHE VORTEILE" KUNSTSTOFFE, CARL HANSER VERLAG. MUNCHEN, DE, Bd. 89, Nr. 9, September 1999 (1999-09), Seiten 85-86,88, XP000958432 ISSN: 0023-5563
- PATENT ABSTRACTS OF JAPAN Bd. 2003, Nr. 07, 3. Juli 2003 (2003-07-03) -& JP 2003 062853 A (MURATA MFG CO LTD), 5. März 2003 (2003-03-05)
- PATENT ABSTRACTS OF JAPAN Bd. 014, Nr. 093 (M-0939), 21. Februar 1990 (1990-02-21) -& JP 01 304919 A (YOSHINO KOGYOSHO CO LTD), 8. Dezember 1989 (1989-12-08)

## Beschreibung

Die Erfindung betrifft ein Werkzeug zum Mehrkomponenten-Spritzgießen, insbesondere zum 2-Komponenten-Spritzgießen, von Kunststoff-Spritzteilen nach dem Oberbegriff des Anspruchs 1.

Es sind Werkzeuge zum 2-Komponenten-Spritzgießen bekannt, bei denen der Formenhohlraum für die zweite Komponente während des Spritzens der ersten Komponente mittels eines Füllteils ausgefüllt ist. Nach dem Spritzen der ersten Komponente wird vor dem Spritzen der zweiten Komponente das Füllteil aus der Kavität herausbewegt. Das Problem hierbei besteht darin, daß die Kontur des Füllteils nicht immer mit der Soll-Kontur zum Spritzen der zweiten Komponente übereinstimmt, so daß diese Technik bei bestimmten zu spritzenden Formen nicht verwendet werden kann.

Man ist deshalb gezwungen, auf die sogenannten Wendewerkzeuge zurückzugreifen, was jedoch mit einem erheblichen technischen Aufwand verbunden ist. Diese Wendewerkzeuge bestehen aus zwei Werkzeughälften, zwischen welchen Formenhohlräume ausgebildet sind und wobei die beiden Werkzeughälften auseinanderfahrbar sowie schließbar sind. In der einen Werkzeughälfte ist eine Umsetzeinrichtung integriert. Diese ist aus dieser Werkzeughälfte längsverschiebbar ausfahrbar, anschließend drehbar sowie schließlich wieder in der Werkzeughälfte versenkbar. Nachdem die erste Komponente gespritzt worden ist, werden die Vorspritzlinge mittels der Umsetzeinrichtung in die zugehörigen Formenhohlräume für die zweite Komponente umgesetzt. - Der Nachteil bei diesen herkömmlichen Wendewerkzeugen besteht darin, daß in manchen Anwendungsfällen nur eine vergleichsweise geringe Anzahl von Spritzteilen gespritzt werden können.

In dem Dokument RIEF B: "MEHR FARBE UND FUNKTION" KUNSTSTOFFE, KARL HAN-SER VERLAG. MÜNCHEN, DE, Bd. 93, Nr. 6, Juni 2003 (2003-06), Seiten 20-22, 24, 26, XP001153845 ISSN: 0023-5563 ist in Bild 10 ein Werkzeug zum Mehrkomponenten-Spritzgießen von Kunststoff-Spritzteilen offenbart. Das Werkzeug weist zwei Werkzeughälften auf, zwischen welchen Formenhohlräume für drei Stationen ausgebildet sind. Die beiden Werkzeughälften sind auseinanderfahrbar sowie schließbar. In der einen Werkzeughälfte ist eine Umsetzeinrichtung in Form eines Drehkreuzes integriert und ausfahrbar, drehbar sowie wieder versenkbar. Mittels dieser Umsetzeinrichtung können die Vorspritzteile zum Spritzen einer weiteren Komponente in die zugehörigen Formenhohlräume umgesetzt werden. Dabei ist die Außenkontur der Umsetzeinrichtung sowie die korrespondierende Innenkontur der zugehörigen Werkzeughälfte durch ein regelmäßiges Vieleck in Form eines Dreiecks gebildet. Auf allen drei Umfangsseiten dieses Dreiecks der Umsetzeinrichtung herum sind eine Mehrzahl von Formenhohlräumen gleicher Art zum Spritzen der ersten Komponente angeordnet. Um den Umfang der Werkzeughälften herum sind korrespondierend Formenhohlräume - entsprechend der Anzahl der Komponenten - unterschiedlicher Art abwechselnd angeordnet, wobei sich ein Satz von identischen Formenhohlräumen der einzelnen Stationen abwechseln. - Das Werkzeug erfordert eine Drehung der Umsetzeinrichtung um 120°, um die Formteile von der einen Station zur anderen Station zu befördern. Dadurch erfolgt das Umsetzen der Vorspritzteile relativ langsam, wodurch die Zykluszeit entsprechend lang ist.

Davon ausgehend liegt der Erfindung die **Aufgabe** zugrunde, ein Werkzeug zum Mehrkomponenten-Spritzgießen, insbesondere zum 2-Komponenten-Spritzgießen, von Kunststoff-Spritzteilen mit einer alternativen Ausgestaltung der Umsetzeinrichtung sowie mit einer alternativen Anordnung der Kavitäten zur Verkürzung der Zykluszeit zu schaffen.

Die technische **Lösung** ist gekennzeichnet durch die Merkmale im Kennzeichen des Anspruchs 1.

Die Grundidee des erfindungsgemäßen Werkzeugs liegt in einer Art Karussellsystem. In der Mitte der einen Werkzeughälfte befindet sich eine Art Drehteller, welcher zudem noch axial verschiebbar ist, nachdem die beiden Werkzeughälften auseinander gefahren worden sind. In dem Drehteller sind um den ringförmigen Umfangsbereich herum die Formenhohlräume für die erste Komponente ausgebildet. Die Außenkontur der Umsetzeinrichtung ist dabei durch ein regelmäßiges Vieleck oder - vorzugsweise - durch einen Kreis gebildet. Die Innenkontur der zugehörigen Werkzeughälfte ist dabei korrespondierend ausgebildet. Im in den beiden Werkzeughälften ausgebildeten feststehenden äußeren Ring sind abwechselnd die Formenhohlräume für die erste Komponente sowie für die zweite Komponente (sowie eventuell für weitere Komponenten) ausgebildet und angeordnet. Während des Spritzvorganges bewegt sich der mittlere Drehteller bzw. die Umsetzeinrichtung periodisch hin und her, um zunächst die erste Komponente und anschließend die zweite Komponente zu spritzen. Der Vorteil besteht darin, daß nur geringe Massen bewegt werden müssen. Es können aufgrund der Karussellanordnung sehr viele Formenhohlräume ausgebildet werden. So stellt es kein Problem dar, daß mit einem derartigen Einzel-Werkzeug 6 oder 8 Spritzteile gleichzeitig gespritzt werden können. Somit kann eine große Anzahl von Spritzteilen in einem einzigen Spritzvorgang hergestellt werden. Vor allem aber ermöglicht das erfinderische Werkzeug ein deutlich schnelleres Umsetzen der Vorspritzteile, wodurch die Zykluszeit verkürzt wird. Zum Spritzen von mehr als zwei Komponenten sind im Kranz der beiden Werkzeughälften die Formenhohlräume für die einzelnen Komponenten nacheinander angeordnet, wobei sich diese Sequenz um den Umfang des Ringes herum periodisch wiederholt.

In einer ersten Durchführungsvariante wird gemäß Anspruch 2 die Umsetzeinrichtung nach dem Spritzen der letzten Komponente wieder in die Ausgangsposition zurückgedreht. Dies bedeutet, daß die Umsetzeinrichtung hin und her getaktet wird.

Alternativ ist es gemäß Anspruch 3 möglich, daß die Umsetzeinrichtung immer in die gleiche Richtung gedreht wird.

Eine bevorzugte Weiterbildung schlägt gemäß Anspruch 4 vor, daß das Werkzeug aus mehreren Einzel-Werkzeugen entsprechender Art besteht und einen Verband bildet. Beispielsweise können zwei Einzel-Werkzeuge zu einem Werkzeug-Paar vereinigt sein. Es ist aber auch denkbar, vier Einzel-Werkzeuge in einer Viereckanordnung zu einem Gesamtwerkzeug zusammenzusetzen. Dadurch kann auf einfache Weise ein 16-fach, ein 24-fach oder gar ein 32-fach Werkzeug geschaffen werden, mit dem eine entsprechend hohe Anzahl von Spritzvorgängen gleichzeitig durchgeführt werden kann.

Gemäß der Weiterbildung in Anspruch 5 weisen dabei die Einzel-Werkzeuge vorzugsweise einen gemeinsamen Antrieb auf.

Ein Ausführungsbeispiel eines erfindungsgemäßen Werkzeugs zum 2-Komponenten-Spritzgießen von Kunststoff-Spritzteilen wird nachfolgend anhand der Zeichnungen beschrieben. In diesen zeigt:
- Fig. 1: eine Draufsicht auf die eine Werkzeughälfte des Werkzeugs in der ersten Position der Umsetzeinrichtung;
- Fig. 2: einen Ausschnitt aus Fig. 1 in einer entsprechenden Darstellung in der zweiten Position der Umsetzeinrichtung.

Das Werkzeug zum 2-Komponenten-Spritzgießen von Kunststoff-Spritzteilen (nämlich Dekkeleinheiten für Kunststofflaschen), setzt sich aus vier Einzel-Werkzeugen 1 zusammen, welche in einer Viereckanordnung angeordnet sind. Den vier Einzel-Werkzeugen ist dabei ein gemeinsamer Antrieb 2 zugeordnet.

Das (Gesamt-)Werkzeug besteht dabei aus zwei Werkzeughälften 3. Dabei ist in den Zeichnungen nur (in einer Draufsicht) die eine Werkzeughälfte 3 dargestellt, während die zweite Werkzeughälfte nicht dargestellt ist. Die Zeichnungen zeigen dabei eine Draufsicht auf die erste Werkzeughälfte 3, nachdem die andere Werkzeughälfte abgehoben worden ist.

In der ersten Werkzeughälfte 3 sind insgesamt vier drehtellerartige Umsetzeinrichtungen 4 angeordnet. Diese besitzen im Randbereich um den Umfang herum jeweils sechs Formenhohlräume 5 zum Spritzen einer ersten Komponente. Daneben befinden sich im Bereich der ersten Werkzeughälfte 3 ebenfalls um den Umfang herum weitere Formenhohlräume 6, 7, wobei diese Formenhohlräume 6, 7 abwechselnd angeordnet sind. Der Formenhohlraum 6 dient dabei dem Spritzen der ersten Komponente, während der Formenhohlraum 7 dem Spritzen der zweiten Komponente dient.

Die - nicht dargestellte - zweite Werkzeughälfte weist unterseitig ebenfalls Formenhohlräume auf, welche die Formenhohlräume 5, 6, 7 zur Schaffung des gewünschten Spritzteils ergänzen.

Die Funktionsweise ist wie folgt:

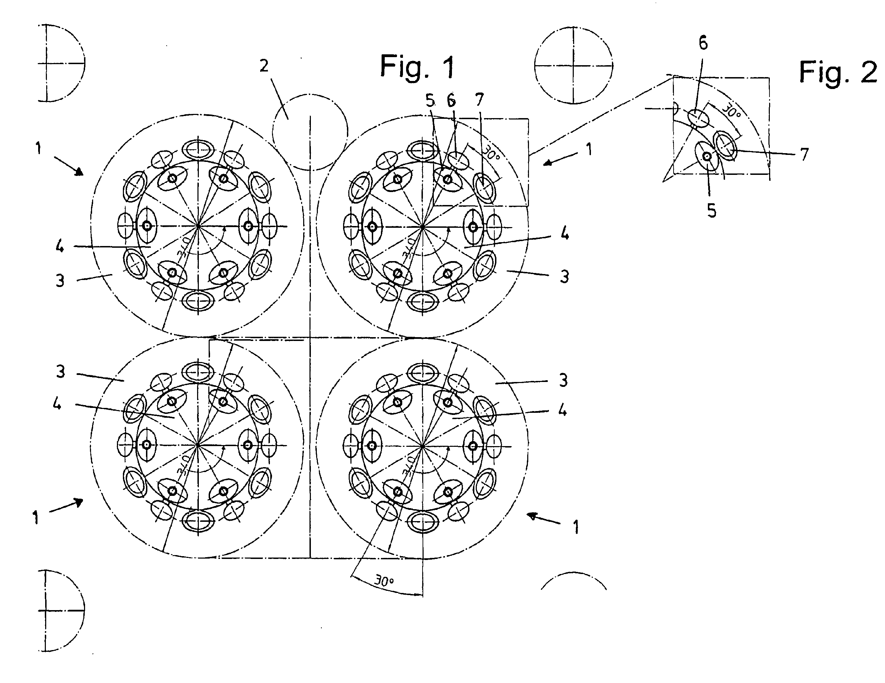

Die Grundposition des Werkzeugs ist in Fig. 1 dargestellt. Hier wird im Zusammenwirken der beiden Formenhohlräume 5, 6 die erste Komponente, d. h. das Vorspritzteil gespritzt.

Anschließend wird das Werkzeug geöffnet, indem die - nicht dargestellte - zweite Werkzeughälfte abgehoben wird. Anschließend werden die Umsetzeinrichtungen 4 etwas angehoben. Danach erfolgt eine Drehung der Umsetzeinrichtungen 4 um 30°. Die Umsetzeinrichtungen 4 werden wieder versenkt, so daß das Vorspritzteil im Formenhohlraum 7 zum Spritzen der zweiten Komponente zu liegen kommt. Diese Situation ist in Fig. 2 dargestellt.

Anschließend wird das Fertigteil durch Spritzen der zweiten Komponente gespritzt. Danach wird das Werkzeug wieder geöffnet, so daß die Umsetzeinrichtungen 4 etwas angehoben werden können. Die Fertigspritzlinge werden ausgeworfen. Schließlich werden die Umsetzeinrichtungen 4 wieder um 30° zurückgedreht und das Werkzeug geschlossen. Anschließend kann der Vorgang wieder von neuem beginnen.

### Bezugszeichenliste

- 1: Einzel-Werkzeug
- 2: Antrieb
- 3: Werkzeughälfte
- 4: Umsetzeinrichtung
- 5: Formenhohraum
- 6: Formenhohlraum
- 7: Formenhohlraum

## Patentansprüche

1. Werkzeug zum Mehrkomponenten-Spritzgießen, insbesondere zum 2-Komponenten-Spritzgießen, von Kunststoff-Spritzteilen
mit zwei Werkzeughälften (3), zwischen welchen Formenhohlräume (5, 6, 7) ausgebildet sind und welche auseinanderfahrbar sowie schließbar sind, sowie
mit einer in der einen Werkzeughälfte (3) integrierten sowie in dieser ausfahrbaren, drehbaren sowie wieder versenkbaren Umsetzeinrichtung (4), mittels welcher die Vorspritzteile zum Spritzen einer weiteren Komponente in die zugehörigen Formenhohlräume (7) umsetzbar sind,
wobei die Außenkontur der Umsetzeinrichtung (4) sowie die korrespondierende Innenkontur der zugehörigen Werkzeughälfte (3) durch ein regelmäßiges Vieleck oder durch einen Kreis gebildet ist,
wobei um den Umfang der Umsetzeinrichtung (4) herum eine Mehrzahl von Formenhohlräumen (5) gleicher Art zum Spritzgießen der ersten Komponente angeordnet sind und
wobei um den Umfang der Werkzeughälften (3) herum korrespondierend Formenhohlräume (6, 7) - entsprechend der Anzahl der Komponenten - unterschiedlicher Art abwechselnd angeordnet sind,
**dadurch gekennzeichnet,**
**daß** um den Umfang der Werkzeughälften (3) herum eine Mehrzahl von Formenhohlräumen (6) zum Spritzgießen der ersten Komponente vorgesehen sind, die gleichmäßig verteilt und abwechselnd mit Formenhohlräumen (7) zum Spritzgießen der zweiten Komponente sowie eventuell mit Formenhohlräumen zum Spritzgießen weiterer Komponenten angeordnet sind.

2. Werkzeug nach Anspruch 1,
**dadurch gekennzeichnet,**
**daß** die Umsetzeinrichtung (4) nach dem Spritzen der letzten Komponente wieder in die Ausgangsposition zurückdrehbar ist.

3. Werkzeug nach Anspruch 1,
**dadurch gekennzeichnet,**
**daß** die Umsetzeinrichtung (4) immer in die gleiche Richtung drehbar ist.

4. Werkzeug nach einem der vorhergehenden Ansprüche,
**dadurch gekennzeichnet,**
**daß** das Werkzeug aus mehreren Einzel-Werkzeugen (1) entsprechender Art besteht und einen Verbund bildet.

5. Werkzeug nach Anspruch 5,
**dadurch gekennzeichnet,**
**daß** die Einzel-Werkzeuge einen gemeinsamen Antrieb (2) aufweisen.

## Claims

1. Tool for multi-component injection moulding, in particular for two-component injection moulding, of plastic mouldings,
with two tool halves (3) between which are formed mould cavities (5, 6, 7) and which can be moved apart and closed, and
with a transfer device (4) that is integrated in one of the tool halves (3) and can be raised from this, rotated and lowered again, by means of which device the premoulds can be transferred to the associated mould cavities (7) for moulding of a further component,
where the outer contour of the transfer device (4) and the corresponding inner contour of the associated tool half (3) are formed by a regular polygon or circle,
where about the periphery of the transfer device (4) is arranged a multiplicity of mould cavities (5) of the same type for injection moulding of the first component, and
where about the periphery of the tool halves (3) are arranged corresponding mould cavities (6, 7), alternately of different types and corresponding in number to the number of components,
**characterised in that**
about the periphery of the tool halves (3) is provided a multiplicity of mould cavities (6) for injection moulding of the first component, which are evenly distributed and arranged alternating with mould cavities (7) for injection moulding of the second component and where applicable with mould cavities for injection moulding of further components.

2. Tool according to claim 1, **characterised in that** after moulding of the last component the transfer device (4) can be turned back to the starting position.

3. Tool according to claim 1, **characterised in that** the transfer device (4) is always rotatable in the same direction.

4. Tool according to any of the preceding claims, **characterised in that** the tool comprises several individual tools (1) of corresponding type and forms a composite.

5. Tool according to claim 5, **characterised in that** the individual tools have a common drive (2).

## Revendications

1. Outil pour le moulage par injection à plusieurs composants, notamment pour le moulage par injection à deux composants de pièces venues d'injection en matière plastique,
comprenant deux moitiés d'outil (3) entre lesquelles des cavités de moulage (5, 6, 7) sont ménagées, et qui peuvent être écartées l'une de l'autre et fermées,
ainsi qu'un dispositif de transfert (4) qui est intégré dans l'une (3) des moitiés d'outil, peut être déployé dans cette dernière, peut accomplir une rotation, peut être de nouveau abaissé, et au moyen duquel les pièces venues de préinjection peuvent être transférées dans les cavités de moulage associées (7), en vue de l'injection d'un composant supplémentaire,
sachant que le profil extérieur du dispositif de transfert (4), ainsi que le profil intérieur complémentaire des moitiés d'outil associées (3), sont matérialisés par un polygone régulier ou par un cercle,
sachant qu'une pluralité de cavités de moulage (5) de même type sont agencées tout autour du pourtour du dispositif de transfert (4), en vue du moulage par injection du premier composant, et
sachant que des cavités de moulage (6, 7) de types différents - en concordance avec le nombre des composants - sont agencées en alternance, de manière complémentaire, tout autour du pourtour des moitiés d'outil (3),
**caractérisé par**
la présence, tout autour du pourtour des moitiés d'outil (3), d'une pluralité de cavités de moulage (6) qui sont destinées au moulage par injection du premier composant, sont disposées avec répartition uniforme et sont agencées en alternance avec des cavités de moulage (7) affectées au moulage par injection du deuxième composant, ainsi qu'éventuellement avec des cavités de moulage affectées au moulage par injection de composants supplémentaires.

2. Outil selon la revendication 1,
**caractérisé par le fait**
**que** le dispositif de transfert (4) peut être ramené, par rotation, à la position de départ après l'injection du dernier composant.

3. Outil selon la revendication 1,
**caractérisé par le fait**
**que** le dispositif de transfert (4) peut tourner en permanence dans la même direction.

4. Outil selon l'une des revendications précédentes,
**caractérisé par le fait**
**que** ledit outil est constitué de plusieurs outils individuels (1) de type correspondant, et forme un ensemble composite.

5. Outil selon la revendication 4,
**caractérisé par le fait**
**que** les outils individuels présentent un entraînement commun (2).
